# DEMANDE DE BREVET EUROPEEN

(11) **EP 2 143 993 A1**
(43) Date de publication de la demande: **13.01.2010**
(21) Numéro de dépôt: 09161970.0
(22) Date de dépôt: 04.06.2009
(51) Int. Cl.: F21V 7/00

(54) **Bloc optique de véhicule automobile à solidarisation optimisée de l'écran au boîtier, et procédé associé de solidarisation de l'écran au boîtier**

(30) Priorité: 10.07.2008 FR 0854689
(71) Demandeur: PEUGEOT CITROËN AUTOMOBILES S.A., 78140 Vélizy Villacoublay (FR)
(72) Inventeur: Peron, Rodolphe, 95220 Herblay (FR)
(74) Mandataire: Vigand, Régis Louis Michel

(57) **Abrégé**

Un bloc optique (FR) de véhicule automobile comprend i) un boîtier (B) comportant une paroi avant (P1) munie d'une cavité (G), une paroi arrière (P2) en regard de sa paroi avant (P1) et munie d'une face d'appui (FA), et deux parois latérales (P3, P4) en regard, reliant ses parois avant (P1) et arrière (P2), et l'une au moins d'entre elles étant munie d'une forme de guidage (EX), et ii) un écran (EC) comportant une partie avant (PV), munie d'une protubérance (PI) propre à être introduite dans la cavité (G), et prolongée par une partie arrière (PR), munie d'au moins une forme (DL) complémentaire de la forme de guidage (EX), et comportant une extrémité (E1) propre à s'appuyer sur la face d'appui (FA) de la paroi arrière (P2) du boîtier (B) et à être solidarisée à cette dernière.

## Description

L'invention concerne les blocs optiques de véhicule automobile.

Comme le sait l'homme de l'art, certains blocs optiques de véhicule automobile sont constitués d'un assemblage d'éléments comprenant un boîtier logeant au moins une source de lumière, et un écran placé devant la source de lumière et solidarisé au boîtier, ainsi qu'une éventuelle glace placée devant l'écran et solidarisée au boîtier.

De nombreux écrans présentent actuellement une forme sensiblement circulaire et sont munis de plusieurs pattes périphériques (généralement trois) qui sont destinées à être logées à l'intérieur de gorges correspondantes définies dans un bord périphérique du boîtier. La solidarisation de l'écran au boîtier s'effectue ensuite par soudage des pattes périphériques aux gorges (par exemple par ultrasons).

Les pattes périphériques étant sensiblement identiques entre elles, tout comme les gorges, on comprendra qu'il existe plusieurs possibilités de placement de l'écran sur son boîtier. Lorsque l'écran est pourvu d'un motif présentant une symétrie de révolution, les différents placements sont équivalents. Mais, dans le cas contraire, les différents placements ne sont plus équivalents, ce qui peut provoquer une perte de temps lors de l'assemblage, voire même une mise au rebut du boîtier et de l'écran si l'erreur de placement est détectée après l'opération de soudage.

Par ailleurs, une fois que les pattes périphériques ont été logées dans les gorges, il existe un jeu entre l'écran et le boîtier en raison des tolérances dimensionnelles indispensables, ce qui ne facilite pas l'opération de soudage.

De plus, en raison de leur nombre, les pattes périphériques et les gorges doivent être sensiblement verticales, si bien qu'elles sont partiellement visibles de l'extérieur (formation d'une zone sombre), ce qui nuit à l'esthétique du bloc optique.

L'invention a donc pour but de proposer un bloc optique de véhicule automobile qui ne présente pas tout ou partie des inconvénients précités.

Elle propose plus précisément un bloc optique comprenant :
- un boîtier comportant une paroi avant munie d'une cavité, une paroi arrière en regard de la paroi avant et munie d'une face d'appui, et deux parois latérales en regard, reliant les parois avant et arrière, et l'une au moins d'entre elles étant munie d'une forme de guidage, et
- un écran comportant une partie avant, munie d'une protubérance propre à être introduite dans la cavité du boîtier, et prolongée par une partie arrière, munie d'au moins une forme complémentaire d'une forme de guidage, et comportant une extrémité propre à s'appuyer sur la face d'appui de la paroi arrière du boîtier et à être solidarisée à cette dernière.

L'écran est de préférence la glace extérieure du bloc optique. Le bloc optique comprend une source lumineuse présentant avantageusement un axe optique qui est un axe de symétrie du faisceau lumineux émis. Les orientations avant, arrière, latérales, sont, sauf mention contraire, arbitraires, et ne donnent que des orientations relatives les unes par aux autres des différentes parois du bloc optique. De préférence, l'écran ne comporte qu'une seule protubérance propre à être introduite dans une cavité du boîtier. De préférence, la protubérance est inclinée par rapport à l'axe optique de la source lumineuse du bloc optique qui est aussi avantageusement l'axe longitudinal du véhicule. Cette inclinaison de la protubérance commence préférentiellement dès la jonction entre la protubérance et le reste de l'écran.

Le bloc optique selon l'invention peut comporter d'autres caractéristiques qui peuvent être prises séparément ou en combinaison, et notamment :
- la cavité peut être une gorge définie sur un bord périphérique de la paroi avant du boîtier ;
- chaque forme de la partie arrière peut être une découpe latérale présentant une forme sensiblement complémentaire de la forme de guidage ;
- chaque forme de guidage peut être une excroissance ;
- la protubérance peut être agencée sous la forme d'une patte inclinée ;
- l'extrémité de la partie arrière de l'écran peut comprendre une zone adaptée à la solidarisation à la paroi arrière du boîtier ;
- le bord périphérique de la paroi avant du boîtier peut présenter une forme en contre-dépouille, au moins au niveau de la zone comportant la cavité du boîtier ;
- chacune des parois latérales du boîtier peut être munie d'une forme de guidage présentant une forme choisie. Dans ce cas, la partie arrière de l'écran est munie de deux découpes latérales présentant des formes sensiblement complémentaires des formes choisies respectives des excroissances ;
   ➢ les formes de guidage (excroissances) peuvent être placées sensiblement l'une en face de l'autre. Dans ce cas, les découpes latérales sont placées sensiblement l'une en face de l'autre ;
- la face d'appui de la paroi arrière du boîtier peut présenter une conformation choisie. Dans ce cas, l'extrémité de la partie arrière de l'écran présente une conformation qui est sensiblement homologue de la conformation choisie de la face d'appui ;
   ➢ la conformation choisie peut par exemple être définie par un pan central sensiblement plan prolongé de part et d'autre par deux pans inclinés ;
- l'extrémité de la partie arrière de l'écran peut être terminée par une face en contre-dépouille ;
- la face d'appui de la paroi arrière du boîtier peut être pourvue d'une petite paroi en contre-dépouille ;
- l'écran peut présenter une forme générale qui est différente d'une forme de révolution.

L'invention propose également un procédé, dédié à la solidarisation d'un écran à un boîtier d'un bloc optique de véhicule automobile, et consistant :
i) à prévoir un bloc optique du type de celui présenté ci-avant,
ii) à introduire la protubérance de l'écran dans la cavité du boîtier, puis à rabattre la partie arrière de l'écran vers la paroi arrière du boîtier jusqu'à ce que son extrémité s'appuie sur la face d'appui de la paroi arrière, et
iii) à solidariser l'extrémité de la partie arrière de l'écran à la paroi arrière du boîtier.

Le procédé selon l'invention peut comporter d'autres caractéristiques qui peuvent être prises séparément ou en combinaison, et notamment :
- au iii) on peut solidariser une zone de l'extrémité de la partie arrière de l'écran, adaptée à cet effet, à la paroi arrière du boîtier ;
- au iii) on peut effectuer la solidarisation par soudage ;
- au iii) le soudage peut se faire par ultrasons.

D'autres caractéristiques et avantages de l'invention apparaîtront à l'examen de la description détaillée ci-après, et des dessins annexés, sur lesquels :
- la figure 1 illustre schématiquement, dans une vue en perspective (du dessus), un exemple de réalisation d'une partie d'un boîtier d'un bloc optique arrière selon l'invention,
- la figure 2 illustre schématiquement, dans une vue en perspective (du dessus), un exemple de réalisation d'un écran propre à être solidarisé au boîtier de la figure 1,
- la figure 3 illustre schématiquement, dans une vue en perspective (de l'arrière), la phase de translation de l'écran (illustré sur la figure 2) vers le boîtier (illustré sur la figure 1),
- la figure 4 illustre schématiquement, dans une vue en perspective (de l'arrière), la phase d'entraînement en rotation de l'écran (illustré sur la figure 2) vers la face d'appui du boîtier (illustré sur la figure 1), qui suit la phase de translation,
- la figure 5 illustre schématiquement, dans une vue en perspective (de l'arrière), l'écran de la figure 2,
- la figure 6 illustre schématiquement, dans une vue en perspective (du dessus et de l'arrière), le boîtier de la figure 1 avant sa solidarisation à l'écran, et
- la figure 7 illustre schématiquement, dans une vue en perspective (du dessus), le bloc optique une fois son écran (illustré sur la figure 2) solidarisé à son boîtier (illustré sur la figure 1).

Les dessins annexés pourront non seulement servir à compléter l'invention, mais aussi contribuer à sa définition, le cas échéant.

L'invention a pour but de proposer un bloc optique destiné à équiper un véhicule automobile.

Dans ce qui suit, on considère, à titre d'exemple non limitatif, que le bloc optique FR est un feu arrière de signalisation destiné à être installé à l'arrière d'un véhicule automobile. Mais, l'invention n'est pas limitée à ce type d'implantation. Elle concerne également certains blocs optiques destinés à être installés à l'avant d'un véhicule automobile, et notamment certains projecteurs.

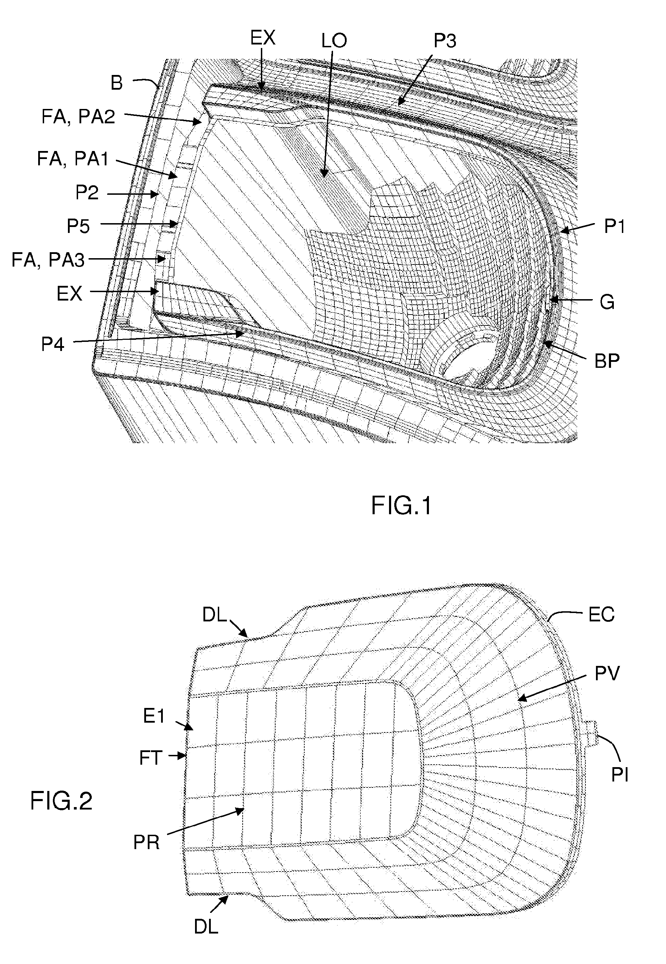

On se réfère tout d'abord aux figures 1 à 3 pour présenter un bloc optique FR selon l'invention.

Un bloc optique FR, selon l'invention, comprend au moins un boîtier B et un écran EC destinés à être solidarisés l'un à l'autre. On notera que le bloc optique FR peut éventuellement comprendre en complément une glace (non représentée) placée devant son écran EC et solidarisée à son boîtier B.

On notera que l'écran EC peut éventuellement présenter une forme de révolution, bien que cela ne soit par le cas de l'exemple illustré.

Comme illustré sur la figure 1, le boîtier B comprend une paroi avant P1, une paroi arrière P2 en regard de la paroi avant P1, et deux parois latérales P3 et P4 en regard l'une de l'autre et reliant les parois avant P1 et arrière P2. Ces parois P1 à P4 définissent un logement interne LO dans lequel est logé au moins partiellement au moins une source de lumière (non représentée et éventuellement fixée sur ce que l'homme de l'art appelle un « porte lampe »), comme par exemple une lampe (ou une ampoule ou encore des diodes électroluminescentes (ou LEDs)).

La paroi avant P1 comprend un bord périphérique BP où se trouve de préférence défini(e) une cavité G (ou un logement) dont la fonction sera précisée plus loin. Ce bord périphérique BP présente de préférence une forme en contre-dépouille, au moins au niveau de la zone qui comporte la cavité G.

La paroi arrière P2 est munie d'une face d'appui FA dont la fonction sera précisée plus loin.

L'une au moins des deux parois latérales P3 et P4 est munie, du côté du logement interne LO, d'une forme de guidage EX. Par exemple, chaque forme de guidage EX est une excroissance (ou un renflement) qui présente une forme choisie. On notera que de préférence, et comme illustré non limitativement sur la figure 1, chaque paroi latérale P3, P4 peut être munie d'une forme de guidage EX présentant une forme choisie.

Chaque excroissance (ou forme de guidage) EX est ici définie à une extrémité d'une paroi latérale P3, P4 qui est située du côté de la partie arrière P2. Mais, cela n'est pas obligatoire. Elle pourrait en effet être définie en un autre endroit d'une paroi latérale P3, P4. Par ailleurs, dans l'exemple non limitatif illustré sur la figure 1 les deux excroissances EX sont définies l'une en face de l'autre. Mais, cela n'est pas obligatoire. Elles pourraient en effet être définies en deux endroits différents des deux parois latérales P3 et P4.

Comme illustré sur la figure 2, l'écran EC comprend une partie avant PV et une partie arrière PR qui se prolongent l'une l'autre.

La partie avant PV est munie, de préférence dans une région centrale de son extrémité libre, d'une protubérance PI (par exemple agencée sous la forme d'une patte inclinée) qui est destinée à être introduite dans la cavité G de la paroi avant PV du boîtier B. Cette patte inclinée (ou protubérance) PI est de préférence en dépouille lorsque la zone du bord périphérique BP qui comporte la cavité G est en contre-dépouille. Cela est particulièrement avantageux car cela permet de cacher la patte inclinée PI et la cavité G et donc de les rendre quasiment invisibles de l'extérieur.

Par exemple, et comme illustré, la cavité G est une gorge.

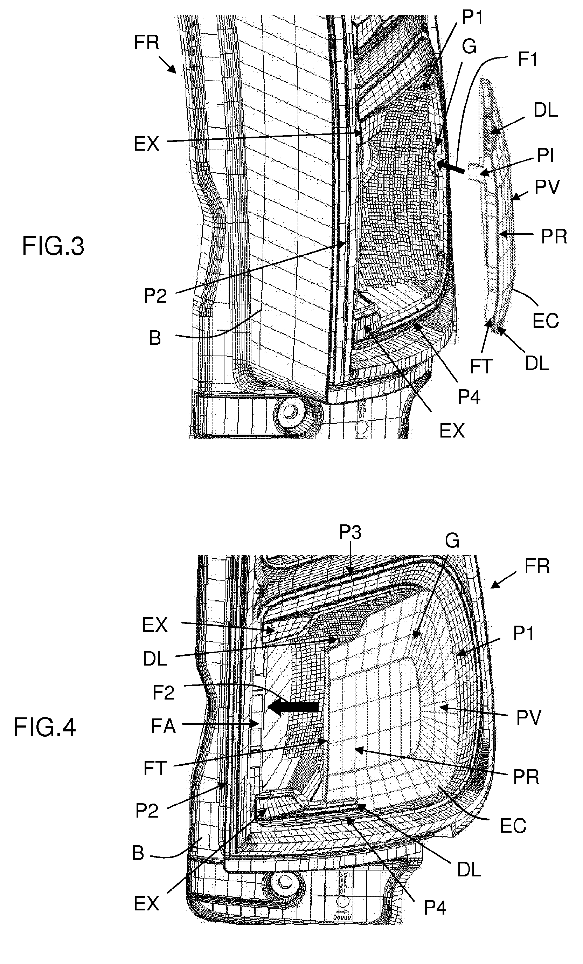

La partie arrière PR est munie d'au moins une forme DL complémentaire d'une forme de guidage (excroissance) EX d'une paroi latérale P3, P4 du boîtier B. Par exemple, chaque forme DL est une découpe latérale DL qui présente une forme sensiblement complémentaire (ou homologue) de la forme choisie de l'une des excroissances EX d'une paroi latérale P3, P4 du boîtier B. On entend ici par « forme sensiblement complémentaire » une forme qui épouse assez étroitement celle (choisie) d'une excroissance EX afin de pouvoir être guidée le long de celle-ci lors de la phase de rotation sur laquelle on reviendra plus loin (en référence à la figure 4).

La partie arrière PR comporte également une extrémité E1 (opposée à l'extrémité de la partie avant PV où se trouve définie la patte inclinée PI) qui est destinée à s'appuyer sur la face d'appui FA de la paroi arrière P2 du boîtier B et à être solidarisée à cette dernière (P2). Cette extrémité E1 est terminée par une face FT dont la fonction sera précisée plus loin.

Afin de solidariser l'écran EC au boîtier B, l'invention propose de mettre en oeuvre le procédé décrit ci-dessous.

Dans une première étape i) on rassemble un écran EC et un boîtier B des types de ceux décrits ci-avant.

Dans une deuxième étape ii) on commence par translater l'écran EC relativement au boîtier B de manière à introduire la patte inclinée PI de cet écran EC dans la gorge G du boîtier B (comme illustré par la flèche F1 de la figure 3). Puis, une fois la patte inclinée PI sensiblement intégralement logée dans la gorge G, on entraîne en rotation la partie arrière PR de l'écran EC vers la paroi arrière P2 du boîtier B (comme illustré par la flèche F2 de la figure 4) jusqu'à ce que l'extrémité E1 de cette partie arrière PR s'appuie (ou repose) sur la face d'appui FA de la paroi arrière P2.

On comprendra que pendant cet entraînement en rotation les excroissances EX des parois latérales P3 et P4 du boîtier B servent de guides aux parties latérales de l'écran EC, au niveau des découpes latérales DL. Par conséquent, l'extrémité E1 de la partie arrière PR de l'écran EC (où sont définies les découpes latérales DL) est automatiquement contrainte à venir se placer et s'appuyer sur la face d'appui FA de la paroi arrière P2 du boîtier B.

Dans une troisième étape iii) on solidarise l'extrémité E1 de la partie arrière PR de l'écran EC à la paroi arrière P2 du boîtier B.

Cette solidarisation peut par exemple se faire par soudage, notamment selon une technique mettant en oeuvre des ultrasons.

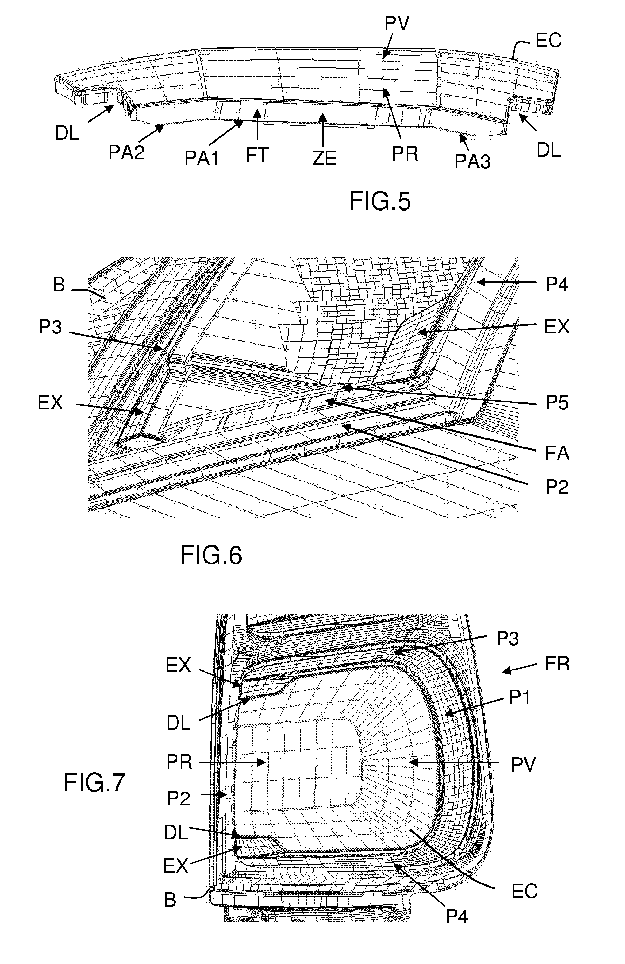

Il est important de noter que lorsque le bloc optique FR comprend une glace devant son écran EC, il est suffisant de solidariser une unique zone ZE de l'extrémité E1 (de la partie arrière PR de l'écran EC) à la paroi arrière P2 du boîtier B. On comprendra en effet que l'étanchéité est alors assurée au niveau de la glace. Comme illustré non limitativement sur la figure 5, cette unique zone ZE est de préférence située au centre de l'extrémité E1. Par ailleurs, on peut par exemple préalablement définir sur le boîtier B une dent de soudure (excroissance de matière) destinée à être fondue (par exemple par ultrasons) afin de coller (ou souder) l'extrémité E1 de l'écran EC sur le boîtier B.

En revanche, lorsque le bloc optique FR ne comprend pas de glace devant son écran EC, il faut alors assurer sa solidarisation étanche sur tout son pourtour et pas seulement au niveau de son extrémité E1.

Le bloc optique FR résultant de l'application du procédé de solidarisation de l'écran EC au boîtier B est illustré sur la figure 7.

Afin de faciliter le placement de l'extrémité E1 sur la face d'appui FA, il est avantageux qu'elles présentent des conformations choisies sensiblement homologues. Par exemple, et comme illustré non limitativement sur les figures 1 et 5, la conformation choisie peut consister à définir un pan central PA1 sensiblement plan et prolongé de part et d'autre par deux pans inclinés PA2 et PA3. Les inclinaisons des deux pans inclinés PA2 et PA3 sont préférentiellement sensiblement identiques, car cela facilite naturellement le centrage de l'extrémité E1 par rapport à la face d'appui FA et optimise le jeu entre l'écran EC et le boîtier B. Mais, cela n'est pas obligatoire.

On notera, comme illustré sur la figure 5, qu'il est avantageux que l'extrémité E1 de la partie arrière PR de l'écran EC soit terminée par une face FT en contre-dépouille car cela permet d'éviter que la zone ZE où est (au minimum) effectuée la solidarisation (par exemple par collage ou soudage) soit visible de l'extérieur (sous la forme d'une zone sombre).

On notera également, comme illustré sur la figure 6, qu'il est avantageux que la face d'appui FA de la paroi arrière P2 du boîtier B soit munie d'une petite paroi (ou mur) P5, de faible extension, en contre-dépouille. Cette petite paroi P5 est destinée à retenir et caler l'écran EC suivant une direction transversale aux parois latérales P3 et P4 du boîtier B. Par conséquent, son angle de contre-dépouille est identique à l'angle de contre-dépouille de l'écran EC, afin que leurs parois soient bien plaquées l'une contre l'autre.

L'invention offre plusieurs avantages, et notamment :
- elle permet d'améliorer le positionnement et le maintien de l'écran EC sur le boîtier B avant leur solidarisation (par exemple par soudage),
- elle permet d'éviter que l'écran EC soit mal orienté par rapport au boîtier B, puisqu'ils assurent tous les deux une fonction de détrompage,
- elle permet de masquer les zones de solidarisation, évitant ainsi de dégrader le style,
- elle permet de n'avoir à effectuer qu'une seule soudure et non plusieurs (lorsque le bloc optique comprend en outre une glace), ce qui simplifie l'outil de soudage et donc induit des économies.

L'invention ne se limite pas aux modes de réalisation de bloc optique et de procédé de solidarisation décrits ci-avant, seulement à titre d'exemple, mais elle englobe toutes les variantes que pourra envisager l'homme de l'art dans le cadre des revendications ci-après.

## Revendications

1. Bloc optique (FR) de véhicule automobile comprenant un boîtier (B) et un écran (EC) destiné à être solidarisé audit boîtier (B), **caractérisé en ce que** ledit boîtier (B) comprend une paroi avant (P1) munie d'une cavité (G), une paroi arrière (P2) en regard de ladite paroi avant (P1) et munie d'une face d'appui (FA), et deux parois latérales (P3, P4) en regard, reliant lesdites parois avant (P1) et arrière (P2), et l'une au moins d'entre elles étant munie d'une forme de guidage (EX), et **en ce que** ledit écran (EC) comprend une partie avant (PV), munie d'une protubérance (PI) propre à être introduite dans ladite cavité (G), et prolongée par une partie arrière (PR), munie d'au moins une forme (DL) complémentaire de ladite forme de guidage (EX), et comportant une extrémité (E1) propre à s'appuyer sur ladite face d'appui (FA) de la paroi arrière (P2) du boîtier (B) et à être solidarisée à cette dernière.

2. Bloc optique selon la revendication 1, **caractérisé en ce que** ladite cavité (G) est une gorge (G) définie sur un bord périphérique (BP) de ladite paroi avant (P1) du boîtier (B).

3. Bloc optique selon l'une des revendications 1 et 2, **caractérisé en ce que** chaque forme (DL) de ladite partie arrière (PR) est une découpe latérale (DL) présentant une forme sensiblement complémentaire de ladite forme de guidage (EX).

4. Bloc optique selon l'une des revendications 1 à 3, **caractérisé en ce que** chaque forme de guidage (EX) est une excroissance.

5. Bloc optique selon l'une des revendications 1 à 4, **caractérisé en ce que** ladite protubérance (PI) est agencée sous la forme d'une patte inclinée.

6. Bloc optique selon l'une des revendications 1 à 5, **caractérisé en ce que** ladite extrémité (E1) de la partie arrière (PR) de l'écran (EC) comprend une zone (ZE) adaptée à ladite solidarisation à la paroi arrière (P2) du boîtier (B).

7. Bloc optique selon l'une des revendications 2 à 6, **caractérisé en ce que** ledit bord périphérique (BP) de la paroi avant (P1) du boîtier (B) présente une forme en contre-dépouille, au moins au niveau de la zone comportant ladite cavité (G).

8. Bloc optique selon la revendication 3 en combinaison avec l'une des revendications 4 à 7, **caractérisé en ce que** chacune desdites parois latérales (P3, P4) du boîtier (B) est munie d'une forme de guidage (EX) présentant une forme choisie, et **en ce que** ladite partie arrière (PR) de l'écran (EC) est munie de deux découpes latérales (DL) présentant des formes sensiblement complémentaires des formes choisies respectives desdites excroissances (EX).

9. Bloc optique selon la revendication 8, **caractérisé en ce que** lesdites formes de guidage (EX) sont placées sensiblement l'une en face de l'autre, et **en ce que** lesdites découpes latérales (DL) sont placées sensiblement l'une en face de l'autre.

10. Bloc optique selon l'une des revendications 1 à 9, **caractérisé en ce que** ladite face d'appui (FA) de la paroi arrière (P2) du boîtier (B) présente une conformation choisie, et **en ce que** ladite extrémité (E1) de la partie arrière (PR) de l'écran (EC) présente une conformation sensiblement homologue de ladite conformation choisie de la face d'appui (FA).

11. Bloc optique selon la revendication 10, **caractérisé en ce que** ladite conformation choisie est définie par un pan central (PA1) sensiblement plan prolongé de part et d'autre par deux pans inclinés (PA2, PA3).

12. Bloc optique selon l'une des revendications 1 à 11, **caractérisé en ce que** ladite extrémité (E1) de la partie arrière (PR) de l'écran (EC) est terminée par une face (FT) en contre-dépouille.

13. Bloc optique selon l'une des revendications 1 à 11, **caractérisé en ce que** ladite face d'appui (FA) de la paroi arrière (P2) du boîtier (B) est pourvue d'une petite paroi (P5) en contre-dépouille.

14. Bloc optique selon l'une des revendications 1 à 12, **caractérisé en ce que** ledit écran (EC) présente une forme générale différente d'une forme de révolution.

15. Procédé de solidarisation d'un écran (EC) à un boîtier (B) d'un bloc optique (FR) de véhicule automobile, **caractérisé en ce qu'**il consiste i) à prévoir un bloc optique (FA) selon l'une des revendications 1 à 14, ii) à introduire la protubérance (PI) de l'écran (EC) dans la cavité (G) du boîtier (B), puis à rabattre la partie arrière (PR) de l'écran (EC) vers la paroi arrière (P2) du boîtier (B) jusqu'à ce que son extrémité (E1) s'appuie sur ladite face d'appui (FA) de la paroi arrière (P2), et iii) à solidariser ladite extrémité (E1) de la partie arrière (PR) de l'écran (EC) à ladite paroi arrière (P2) du boîtier (B).

16. Procédé selon la revendication 15, **caractérisé en ce qu'**au iii) on solidarise une zone (ZE) de l'extrémité (E1) de la partie arrière (PR) de l'écran (EC), adaptée à cet effet, à ladite paroi arrière (P2) du boîtier (B).

17. Procédé selon l'une des revendications 15 et 16, **caractérisé en ce qu'**au iii) on effectue ladite solidarisation par soudage.

18. Procédé selon la revendication 17, **caractérisé en ce qu'**au iii) ledit soudage se fait par ultrasons.
